# EUROPEAN PATENT SPECIFICATION

(11) **EP 3 229 135 B1**
(45) Date of publication and mention of the grant of the patent: **22.04.2020**
(21) Application number: 17163847.1
(22) Date of filing: 30.03.2017
(51) Int. Cl.: G06F 9/455, G06F 11/30, G06F 16/176

(54) **CONTROL DEVICE, CONTROL METHOD AND PROGRAM FOR CONTROLLING AN EQUIPMENT OR A MACHINE**
STEUERUNGSVORRICHTUNG, STEUERUNGSVERFAHREN UND PROGRAMM ZUM STEUERN VON EINEM GERÄT ODER EINER MASCHINE
PROCÉDÉ, DISPOSITIF ET PROGRAMME DE COMMANDE POUR LE CONTROLE D'UN ÉQUIPEMENT OU D'UNE MACHINE

(30) Priority: 07.04.2016 JP 2016077607
(43) Date of publication of application: 11.10.2017
(73) Proprietor: Omron Corporation, Kyoto-shi, Kyoto 600-8530 (JP)
(72) Inventor: KANAYA, Yuki, Kyoto-shi, Kyoto 600-8530 (JP); YAOITA, Koji, Kyoto-shi, Kyoto 600-8530 (JP); MIYAGUCHI, Shuhei, Kyoto-shi, Kyoto 600-8530 (JP); HIROTA, Takuya, Kyoto-shi, Kyoto 600-8530 (JP); SCHEFFER, Fred, 2132 JD Hoofddorp (NL); CRIJNS, Thorstin, 5234 GM, 's-Hertogenbosch (NL)
(74) Representative: Becker & Kurig Partnerschaft Patentanwälte PartmbB

(56) References cited:
- US-A1- 2013 219 212
- US-A1- 2014 223 122
- Anonymous: "Using Samba to share files between Linux and Windows | Linux.com | The source for Linux information", , 15 August 2007 (2007-08-15), XP055397129, Retrieved from the Internet: URL:https://www.linux.com/news/using-samba -share-files-between-linux-and-windows [retrieved on 2017-08-08]
- Anonymous: "VMware Workstation 3.2 - Sharing Files Between Guest and Host Operating Systems", , 26 January 2014 (2014-01-26), XP055477519, https://www.vmware.com/ Retrieved from the Internet: URL:https://web.archive.org/web/2014012616 1423/https://www.vmware.com/support/ws3/do c/ws32_running9.html [retrieved on 2018-05-23]

## Description

### BACKGROUND OF THE INVENTION

### Field of the Invention

This technique relates to a control device, a control method and a program for controlling an equipment or a machine.

### Description of the Related Art

With the advances in information and communication technology (ICT) in recent years, reliability of general purpose computing devices is increasing. In factory automation (FA) related devices for controlling equipment or machines, introduction of such general purpose computing devices is in progress.

For example, Japanese Patent Application Publication No. 2009-217707 (Patent Document 1) discloses a programmable automation controller (PAC) which is regarded as a next generation industrial controller. Similarly to a general programmable logic controller (PLC), the PAC communicates with a machine of a production equipment through a network, thereby performing transmission and reception of input/output (I/O) data, so as to control the production equipment. In the configuration disclosed in Patent Document 1, data stored in a memory device of the PAC can be accessed for reading or writing by a general purpose personal computer or the like without using any dedicated tool device.

### [Prior-Art Documents]

Prior Art document XP055397129 "Using Samba to share files between Linux and Windows" published on the 15.08.2015 discloses that a user can share a defined part of a storage area, and a client can access the shared area from another device: file-sharing configuration. The server and the client are on two different operating systems.

Prior Art document US2013219212 A1 from TERADA YOSHIKI [JP] published on the 22.08.2013 discloses monitoring functions for regularly assessing the accessibility of storage devices (breakdown or network problem for example) by performing read or write command. Storing the result of the assessment in corresponding flags, stored in a table, and used by the array state monitoring unit.

Prior Art document US2014223122 Al from BUTT ALI R [US] published on 07.08.2014 discloses Virtual Machines communicating through a hypervisor, and also shows a configuration with several memory types.

### [Patent Documents]

[Patent Document 1] Japanese Patent Application Publication No. 2009-217707

### SUMMARY OF THE INVENTION

### [Problems to Be Solved by the Invention]

With the advances in ICT, in addition to reliability, processing capability of computing devices is also enhanced. A so-called virtualization technique and the like is developing in which mutually independent operating system (hereinafter also simply referred to as "OS") environments are realized using a common hardware resource, and different applications are respectively executed in each of the OS environments. By adopting such virtualization technique, it is possible to reduce device cost.

In the above configuration disclosed in Patent Document 1, only a process of data access performed on an FA machine by an external tool device or the like is assumed, and such virtualization technique is not assumed. Hence, it is desired that a control device adopting the virtualization technique have a more suitable configuration.

### [Means for Solving the Problems]

The invention is set out in an independent control device claim 1 in association with the corresponding independent control method claim 10 and independent program claim 11.

### [Effects of the Invention]

According to the present technique, a more suitable configuration can be provided for a control device adopting a virtualization technique.

### BRIEF DESCRIPTION OF THE DRAWINGS

FIGs. 1A and 1B are schematic diagrams for explaining, by comparison with a general PLC, an aspect of a control device according to the present embodiment.
FIG. 2 is a schematic diagram showing an example of hardware configuration of the control device according to the present embodiment.
FIG. 3 is a schematic diagram showing an example of software configuration of the control device according to the present embodiment.
FIG. 4 is a schematic diagram for explaining a shared area monitoring function of the control device according to the present embodiment.
FIG. 5 is a diagram illustrating an example of a user program using a system variable relating to the monitoring function for the shared area shown in FIG. 4.
FIG. 6 is a flowchart showing a processing procedure relating to file sharing executed in a real-time OS of the control device according to the present embodiment.
FIG. 7 is a schematic diagram showing an implementation using a plurality of types of storage areas in the control device according to the present embodiment.

### DESCRIPTION OF THE EMBODIMENTS

Embodiments of the invention are explained in detail with reference to the drawings. Moreover, the same or equivalent parts in the drawings are denoted by the same reference numerals, and explanations thereof are not repeated.

### <A. Outline>

A control device 100 according to the present embodiment controls an equipment or a machine, and is capable of providing functions equivalent to those provided by a general PLC, and providing additional functions as explained below.

The control device 100 has a virtualized environment capable of executing a plurality of OSs independently of each other using a common hardware resource. In this virtualized environment, a real-time OS (also labeled as "RTOS" in the drawings) executed using a hardware resource and a general purpose OS executed using the hardware resource and operating independently of the real-time OS can be executed in parallel. The hardware resource allocated to the real-time OS and the general purpose OS is managed by a hypervisor. Moreover, the number of OSs executed on the hypervisor is not limited to 2, but a plurality of real-time OSs may be executed, and a plurality of general purpose OSs may also be executed.

In the control device 100, since the real-time OS suitable for executing a program for controlling the equipment or a machine is executed and the general purpose OS that is user-friendly is also executed, realization of a stable control operation and improvement of usability can both be achieved.

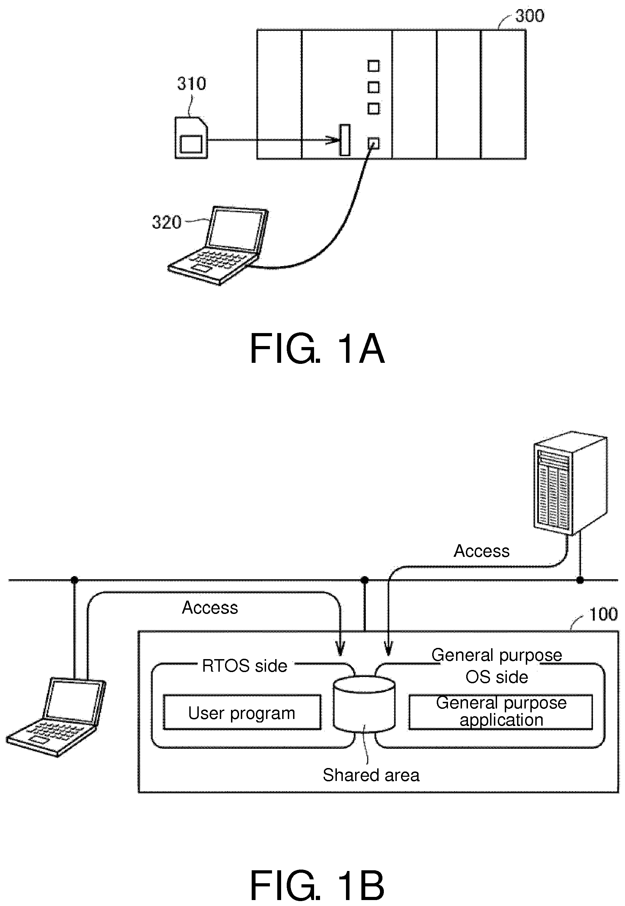

FIGs. 1A and 1B are schematic diagrams for explaining, by comparison with a general PLC, an aspect of the control device 100 according to the present embodiment. FIG. 1A shows a configuration example of the general PLC; FIG. 1B shows a configuration example of the control device 100 according to the present embodiment.

As shown in FIG. 1A, in a general PLC 300, through a portable recording medium 310 (e.g., a secure digital (SD) memory card), recipe data (e.g., information specifying processes designated by type) may be given to the PLC 300, and log data and so on collected by the PLC 300 may be retrieved.

In cases of using the recording medium 310, it is necessary to insert and extract the recording medium 310 with respect to the PLC 300, and the handling is slightly inconvenient.

Alternatively, a method is used in which the PLC 300 is connected to a personal computer 320 to utilize an FTP client function of the personal computer 320 or to utilize a program development application installed on the personal computer 320, so as to access the PLC 300.

However, in the case of using the FTP client function, it is necessary to operate a corresponding application. In addition, the program development application is a dedicated application, and handling thereof is not completely the same as handling of data on a general purpose personal computer.

As shown in FIG. 1B, in the control device 100 according to the present embodiment, while the real-time OS and the general purpose OS are independently executed, a shared storage area (hereinafter also simply referred to as "shared area") accessible respectively from both OSs is prepared. Typically, the shared area is realized in a form of a shared folder or the like. In the control device 100, while the program for controlling the equipment or the machine is executed, a general purpose user interface for accessing the shared area is also provided. That is, from the viewpoint of a user of the control device 100, various data relating to control of the equipment or the machine can be easily accessed using a general purpose application executed on a daily used general purpose personal computer.

Furthermore, the shared area can also be accessed from another device (e.g., a host server device or the like). By adopting such configuration, it is possible to implement processing such as collection and analysis of data processed or possessed by the control device 100 using a more general technique.

In this way, in the control device 100 according to the present embodiment, a storage area commonly accessible from the real-time OS and the general purpose OS that are independently executed is prepared. Thereby, data access and data processing can be realized more flexibly.

### <B. Device Configuration of Control Device>

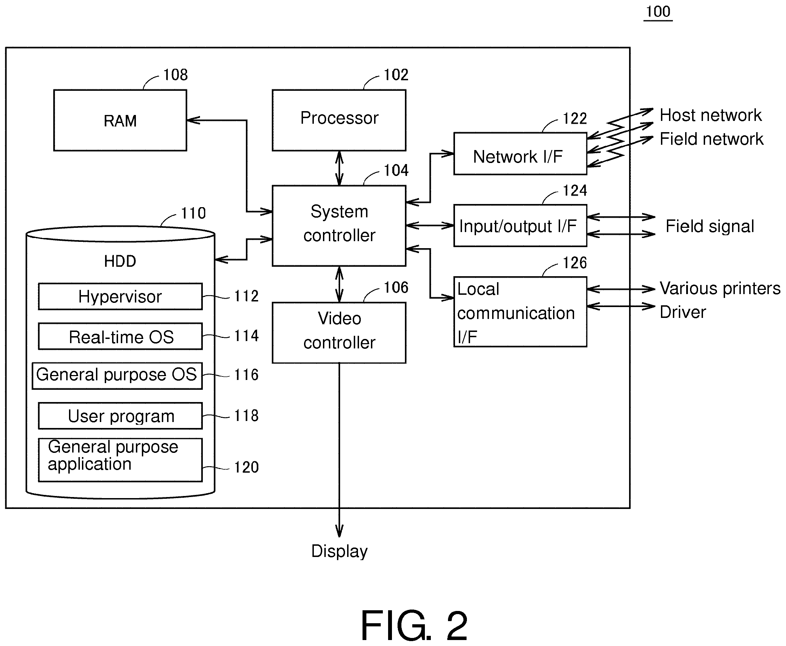

Next, an example of device configuration of the control device 100 according to the present embodiment is explained. FIG. 2 is a schematic diagram showing an example of hardware configuration of the control device 100 according to the present embodiment. The control device 100 shown in FIG. 2 is basically composed of computing elements according to a general purpose architecture, and has hardware configuration similar to that of a general purpose personal computer.

Referring to FIG. 2, the control device 100 includes a processor 102, a system controller 104, a video controller 106, a random access memory (RAM) 108, a hard disk drive (HDD) 110, a network interface (hereinafter also described as "I/F") 122, an input/output interface 124, and a local communication interface 126.

The processor 102 is an arithmetic logic unit (ALU) executing various programs as described later, and may typically include a central processing unit (CPU), a micro processing unit (MPU), a graphics processing unit (GPU) and so on. A plurality of processors 102 may be implemented, or a plurality of computing cores may be implemented in a single processor 102. That is, the processor 102 may be a so-called multiprocessor or may be a multi-core processor.

The system controller 104 is a circuit controlling and mediating exchanges of internal commands or data between the processor 102 and a peripheral device, and is typically implemented by large scale integration (LSI) or the like.

The video controller 106 is connected to a display or the like, and visually outputs a computation result or the like provided by the control device 100.

The RAM 108 temporarily stores work data required for executing a program in the processor 102 or data obtained by exchange with the outside. The RAM 108 is typically implemented by a volatile memory device such as a dynamic random access memory (DRAM) or a static random access memory (SRAM).

The HDD 110 is a storage device that stores, in a nonvolatile manner, a program executed by the processor 102 or data generated due to execution of a program by the processor 102. A storage device such as a solid state drive (SSD) or an optical disk may be used in place of or in addition to the HDD 110.

As shown in FIG. 2, the control device 100 realizes a virtual environment using a hardware resource including one or more processors 102 and storage devices (in FIG. 2, the HDD 110).

The HDD 110 typically stores a hypervisor 112, a real-time operating system (OS) 114, a general purpose OS 116, a user program 118 and a general purpose application 120. Furthermore, various programs operating on each of the OSs are stored.

As described later, the hypervisor 112 is a managing program for executing a plurality of OSs independently of each other using a common hardware resource. The hypervisor 112 manages the hardware resource allocated to the real-time OS 114 and the general purpose OS 116. The hypervisor 112 provides a virtual hardware resource for each of the OSs. From the viewpoint of each of the OSs, the same process as that using a conventional hardware resource can be executed.

The real-time OS 114 executes a designated task based on designated priority, thereby providing an environment capable of completing a designated process within a predetermined time. Specifically, the real-time OS 114 includes a scheduler, an input/output (I/O) process module, a network processing module and so on.

The general purpose OS 116 is executed using the hardware resource of the control device 100 and operates independently of the real-time OS 114. The general purpose OS 116 is an OS executed by a general personal computer or the like, and examples thereof include Windows®, Mac OS®, Unix®, Linux®, Android®, MS-DOS®, and any other arbitrary OS derived from Unix.

The user program 118 is a control program arbitrarily created by the user and is executed by the real-time OS 114. In cases where the real-time OS provides an interpreter function, the user program 118 may be stored in a form of source code or intermediate code, or may be stored in an executable state such as an object format.

The general purpose application 120 is an arbitrary application executed on the general purpose OS 116, and may be included as part of the general purpose OS 116, an arbitrary commercially available application, an original application created by the user and so on.

The network interface 122 is an interface for exchanging data with another device, and may include, for example, a port for connecting to a host computer or a host network, a port for connecting to various field devices through a field network or a field bus, a port for exchanging data with another control device and so on. A device complying with an arbitrary standard can be used as the network interface 122. For example, any of a wired manner such as Ethernet®, EtherCAT® and so on, or a wireless manner such as wireless local area network (WLAN), Bluetooth® and so on may be used.

The input/output interface 124 corresponds to an input/output unit installed on a PLC, and exchanges field signals (digital input/output signals, analog input/output signals, pulse signals, etc.) with field machines.

The local communication interface 126 includes an arbitrary communication interface. Typically, the local communication interface 126 includes a universal serial bus (USB), parallel communication, serial communication such as RS-232C, and so on, and exchanges data with various peripheral devices such as a printer.

### <C. Software Configuration of Control Device>

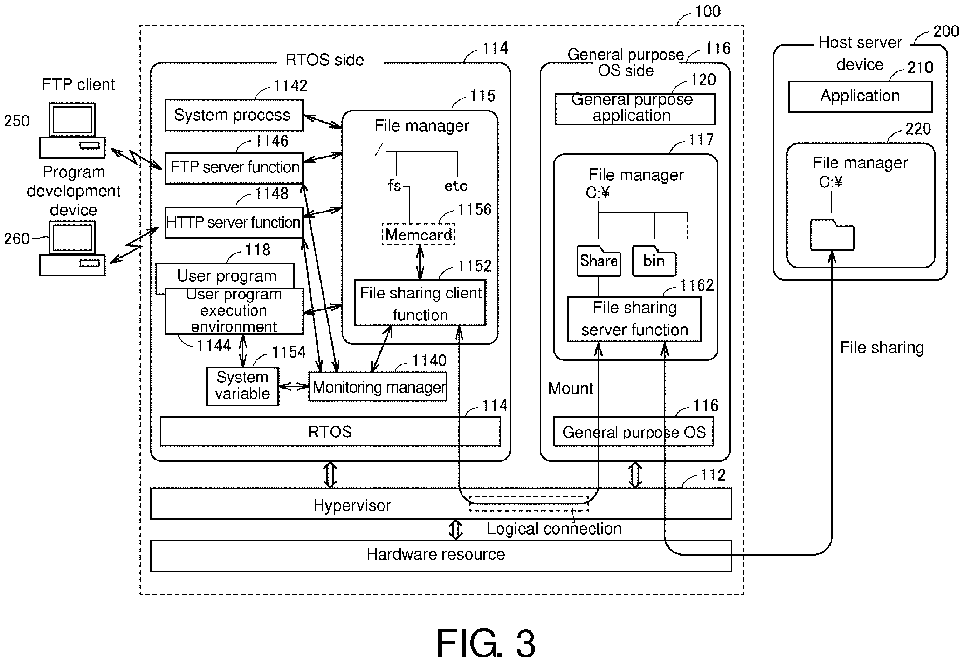

Next, an example of software configuration of the control device 100 is explained. FIG. 3 is a schematic diagram showing an example of software configuration of the control device 100 according to the present embodiment.

Referring to FIG. 3, in the control device 100, the hypervisor 112 manages the hardware resource of the control device 100, and allocates the hardware resource to the real-time OS 114 and the general purpose OS 116 while arbitrating, thereby executing the mutually independent real-time OS 114 and general purpose OS 116 on the common hardware resource. That is, a virtualized environment executing a plurality of different OSs is realized using the hypervisor 112.

In an execution environment of the real-time OS 114 (also labeled as "RTOS side" in the drawings), mainly a system process 1142, a user program execution environment 1144, an FTP server function 1146, an HTTP server function 1148, and a file manager 115 are executed. An arbitrary task or process that is not illustrated may also be executed.

The system process 1142 provides necessary functions for the user program execution environment 1144 to execute the user program 118. Specifically, processes such as collecting a field signal, mapping the collected field signal to a variable, or updating an outputted command value on are executed.

The user program execution environment 1144 provides functions corresponding to the firmware implemented in a PLC, and provides a library or the like for executing the user program 118. The user program 118 is composed of a combination of a sequence command, a function block command, a special command and so on, and may be composed of a plurality of tasks having different execution cycles from each other. All or part of the user program 118 may be in an executable format such as an object format. In addition, the user program execution environment 1144 may sequentially interpret and execute the combination of commands (e.g., sequence commands, etc.) included in the user program 118.

The FTP server function 1146 operates on the real-time OS 114 and processes an FTP connection from an external device. Typically, the FTP server function 1146 provides a function to manage access to data managed by the file manager 115 according to access from an external personal computer 250 (FTP client function).

The HTTP server function 1148 operates on the real-time OS 114 and processes an HTTP connection from an external device. Typically, the HTTP server function 1148 provides a function to manage access to data managed by the file manager 115 according to access from an external personal computer 260 (typically a program development device).

The file manager 115 has a function to provide file access to each process in the real-time OS 114, and controls reading from and writing to the storage area in the HDD 110 (see FIG. 2) that has been allocated to the real-time OS 114 in advance. In a virtual environment, with respect to an access request from the file manager 115, the hypervisor 112 allocates the hardware resource relating to access to the HDD 110, thereby realizing the access to the HDD 110.

In an execution environment (also labeled as "General purpose OS side" in the drawings) of the general purpose OS 116, mainly the general purpose application 120 and a file manager 117 are executed. An arbitrary task or process that is not illustrated may also be executed.

The file manager 117 has a function to provide file access to each process in the general purpose OS 116, and controls reading from and writing to a storage area in the HDD 110 (see FIG. 2) that has been allocated to the general purpose OS 116 in advance. The general purpose application 120 executed on the general purpose OS 116 enables access to data managed by the file manager 117. In a virtual environment, with respect to an access request from the file manager 117, the hypervisor 112 allocates the hardware resource relating to access to the HDD 110, thereby realizing the access to the HDD 110.

In the control device 100 according to the present embodiment, the file manager 117 of the general purpose OS 116 has a file sharing server function 1162, and the file manager 115 of the real-time OS 114 has a file sharing client function 1152. In the control device 100, the file sharing client function 1152 of the file manager 115 of the real-time OS 114 mounts a shard storage area provided by the file sharing server function 1162 of the file manager 117 of the general purpose OS 116, thereby enabling each process executed on the real-time OS 114 to access a storage area (the shard storage area) managed by the general purpose OS 116 as if the storage area were a storage area managed by the general purpose OS 114.

More specifically, the hypervisor 112 establishes a virtual network connection (logical connection) between the real-time OS 114 and the general purpose OS 116. Accordingly, an application executed on the real-time OS 114 can communicate with an application executed on the general purpose OS 116 through the virtual network connection.

The file sharing server function 1162 operates on the general purpose OS 116, reserves a part of a storage device as a storage area, and shares at least one part of the reserved storage area set by the user with another device (in the present embodiment, the real-time OS 114 that virtually looks like another device, or an application or process executed on the real-time OS 114). Part or all of the reserved storage area can be arbitrarily set as the shared area provided by the file sharing server function 1162 based on user settings. Moreover, a predetermined folder can also be shared regardless of the user settings.

As a protocol for the file sharing server function 1162 and the file sharing client function 1152 to realize file sharing, an arbitrary protocol among currently available protocols and future available protocols can be adopted. Examples of such protocol for realizing file sharing include Server Message Block (SMB), Network File System (NFS), Apple Filing Protocol (AFP) and so on.

The file sharing client function 1152 operates on the real-time OS 114, and participates in the file sharing server function 1162 as a client through the hypervisor 112. The file sharing client function 1152 participates in the file sharing server function 1162 as a client, thereby providing a storage area accessible to the user program 118 and to the external device connected through the FTP server function 1146 or the HTTP server function 1148.

The file sharing client function 1152 provides a predetermined storage area of the HDD 110 managed by the file sharing server function 1162 as if the storage area were a storage area (shared area 1156) managed on the real-time OS 114. That is, the file sharing client function 1152 is capable of sharing a storage area held by another OS executed on the hypervisor 112 or by another device connected to the control device 100 through a network. In this way, the file sharing client function 1152 is capable of providing the storage area held by another OS or by another device as a virtual storage area given a specific folder name within the file manager 115 (so-called "mounting").

Specifically, by cooperating with the file sharing client function 1152, the real-time OS 114 provides a command available to the user program 118 and so on executed on the real-time OS 114 for accessing (writing data to and reading data from) the shared area 1156. That is, in a program operating on the real-time OS 114, a command enabling access to the shared area 1156 is available.

On the real-time OS 114, it is possible for an external device to access the shared area 1156 through the FTP server function 1146, and it is also possible for an external device to access the shared area 1156 through the HTTP server function 1148. As a typical implementation example, the FTP server function 1146 and the HTTP server function 1148 use a function made public by a monitoring manager 1140 to confirm whether an object storage area is in a shared state (i.e., whether it is set as the shared area 1156), and when the object storage area is confirmed to be the shared area, use a function made public by the file manager 115 to access the area.

Alternatively, a command available to the user program 118 may also be implemented so as to be utilized by the FTP server function 1146 and the HTTP server function 1148. By adopting such implementation, an implementation amount of functions for access or the like can be reduced.

The control device 100 is also connected to another device (e.g., a host server device 200) through the network interface 122, and from the viewpoint of a network relating to the network interface 122, the file sharing function can also be utilized. That is, from the viewpoint of the general purpose OS 116, both the real-time OS 114 and the host server device 200 can be regarded as other devices existing on the network.

A file manager 220 implemented in the host server device 200 is capable of mounting a storage area managed by the file manager 117 of the control device 100 as its own folder. Through this file sharing, an arbitrary application 210 executed by the host server device 200 is capable of accessing the storage area managed by the file manager 117 of the general purpose OS 116 of the control device 100. In this way, the file sharing server function 1162 is capable of enabling a shared area to be shared with another device different from the control device 100.

Moreover, the way or format in which the file manager 115 of the real-time OS 114 manages the storage area of the HDD 110 and the way or format in which the file manager 117 of the general purpose OS 116 manages the storage area of the HDD 110 may differ from each other.

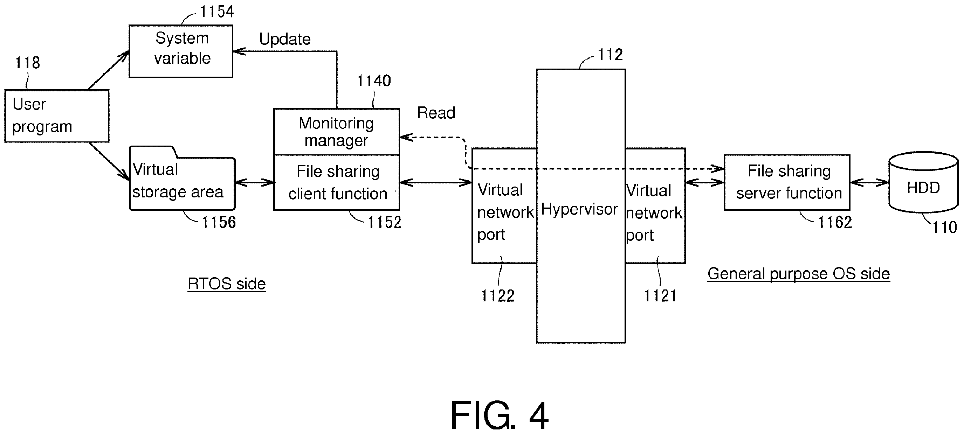

In FIG. 3 and FIG. 4, a configuration in which a storage area of the HDD 110 built in the control device 100 is shared is exemplified. However, the shared storage area may also be a storage device externally attached to the control device 100, or a storage device built in or externally attached to another device accessible by the general purpose OS 116.

In the case where a plurality of real-time OSs are executed in parallel, each of the real-time OSs may be capable of accessing the shared storage area.

### <D. Function to Monitor Whether or Not Shared Area is Accessible>

Next, a function to monitor whether or not a shared area is accessible on a real-time OS executed in the control device 100 according to the present embodiment is explained. As described above, although the real-time OS 114 is capable of utilizing the file sharing function provided by the general purpose OS 116, generally, the general purpose OS 116 is inferior in stability and robustness compared to the real-time OS 114. Hence, it is assumed that, even if the real-time OS 114 is sound, some defects may occur on the side of the general purpose OS 116, and the file sharing function may be down.

Accordingly, it is preferred to implement a function in the real-time OS 114 to monitor, in a state in which any shared area is mounted, whether or not file sharing is enabled, i.e., whether or not the shared area is accessible, in a periodic manner (e.g., every second) or an event-like manner.

FIG. 4 is a schematic diagram for explaining a shared area monitoring function of the control device 100 according to the present embodiment. Referring to FIG. 4, the file sharing server function 1162 of the general purpose OS 116 and the file sharing client function 1152 of the real-time OS 114 are connected to each other via a virtual network through virtual network ports 1121 and 1122 provided by the hypervisor 112.

The monitoring manager 1140 in cooperation with the file sharing client function 1152 operates on the real-time OS 114 and periodically monitors whether or not the shared area 1156 provided by the file sharing server function 1162 is accessible. More specifically, the monitoring manager 1140 periodically performs data reading on the file sharing server function 1162, and monitors whether or not the shared area is accessible based on success or failure of the data reading. According to a result of the monitoring, the monitoring manager 1140 updates a system variable 1154. The system variable 1154 is stored in a storage area managed by the real-time OS 114 and may contain information showing whether or not the shared area is accessible. Moreover, instead of periodically performing data reading, periodical data writing may be performed, and whether or not the shared area is accessible may also be monitored based on success or failure of the data writing. Whether data reading or data writing is to be performed may be selected by taking into consideration preset access authority and so on.

The system variable 1154 containing the information showing whether or not the shared area is accessible can be referenced from a user program. That is, in a program operating on the real-time OS 114, the information showing whether or not the shared area is accessible is referenceable.

In addition, the information showing whether or not the shared area is accessible may also be referenceable from the FTP server function 1146 and the HTTP server function 1148. That is, on the real-time OS 114, a function is provided to enable the information showing whether or not the shared area is accessible to be referenced from an external device through the FTP server function 1146 and the HTTP server function 1148. In this case, the FTP server function 1146 and the HTTP server function 1148 may directly reference the system variable 1154, or the FTP server function 1146 and the HTTP server function 1148 may make an inquiry to the monitoring manager 1140.

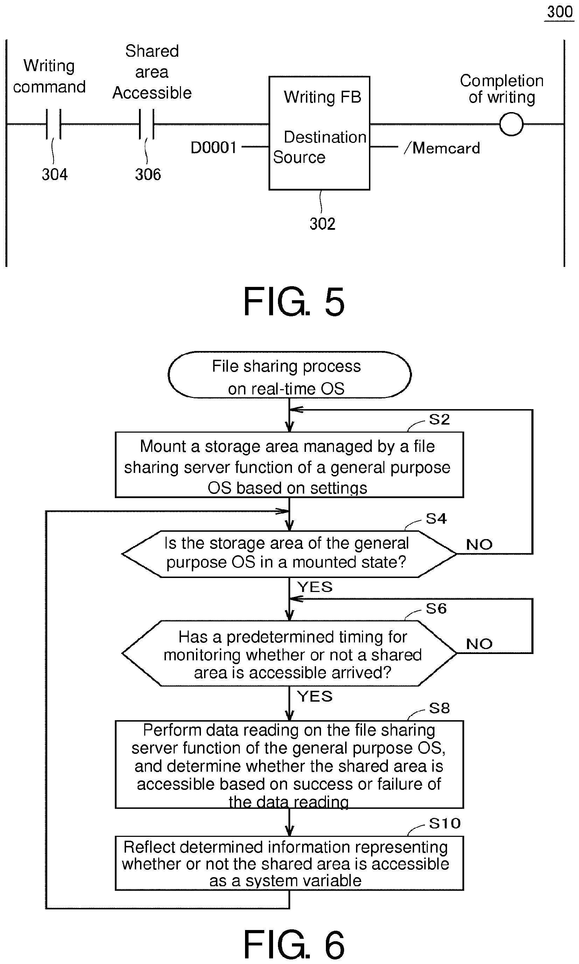

FIG. 5 is a diagram illustrating an example of a user program using the system variable 1154 relating to the monitoring function for the shared area shown in FIG. 4. In the example shown in FIG. 5, a command for writing data contained in "D0001" is defined in a directory "Memcard". As a condition for activating a function block 302 relating to writing data, a flag 304 indicating a writing command and a flag 306 indicating whether or not the shared area is accessible are included.

Only when the flag 304 is activated to "ON" by another command and the value of the flag 306 is "ON" that indicates that the shared area is accessible, the function block 302 is activated and a data writing process is executed. That is, the writing command is executed only when the shared area is accessible. By implementing such monitoring function as to whether or not the shared area is accessible, when an OS virtually handles a storage area managed by another OS as a storage area managed by itself, even if a defect occurs in the virtually set storage area for some reason, a situation that execution of the user program 118 is hindered due to the defect can be avoided.

As shown in FIG. 4 and FIG. 5, the user program 118 is capable of utilizing any information showing whether or not a shared area (typically a shared folder) provided by the file sharing server function 1162 is accessible.

FIG. 6 is a flowchart showing a processing procedure relating to file sharing executed in a real-time OS of the control device 100 according to the present embodiment. Each step shown in FIG. 6 is realized by executing the system process 1142 (see FIG. 3) of the real-time OS 114 by the processor 102.

Referring to FIG. 6, based on prior system settings or settings in the user program 118, a storage area managed by the file sharing server function 1162 of the general purpose OS 116 is mounted (step S2). Accordingly, a storage area that is referenceable in the user program 118 is provided.

Whether the storage area of the general purpose OS 116 is in a mounted state is determined (step S4); if the storage area of the general purpose OS 116 is not in the mounted state (NO in step S4), the processes in and after step S2 are repeated.

If the storage area of the general purpose OS 116 is in the mounted state (YES in step S4), whether or not a predetermined timing for monitoring whether or not a shared area is accessible has arrived is determined (step S6). If the predetermined timing for monitoring whether or not the shared area is accessible has not arrived (NO in step S6), it waits until the predetermined timing for monitoring whether or not the shared area is accessible arrives.

If the predetermined timing for monitoring whether or not the shared area is accessible has arrived (YES in step S6), data reading is performed on the file sharing server function 1162 of the general purpose OS 116, and whether the shared area is accessible is determined based on success or failure of the data reading (step S8). Then, the determined information showing whether or not the shared area is accessible is reflected as the system variable 1154 (step S10). Then, the processes in and after step S4 are repeated.

Moreover, in the above explanations, the configuration in which the monitoring manager 1140 monitors whether or not the shared area is accessible has been explained. However, a function to clarify a main cause of a case of inaccessibility that "the file sharing server function 1162 stops" may also be implemented.

### <E. Implementation Using a Plurality of Types of Storage Areas>

As described above, since the control device 100 according to the present embodiment can use the storage area managed by another OS, by implementing a plurality of types of storage areas according to properties or types of data, while the stability can be improved further, usability can also be improved.

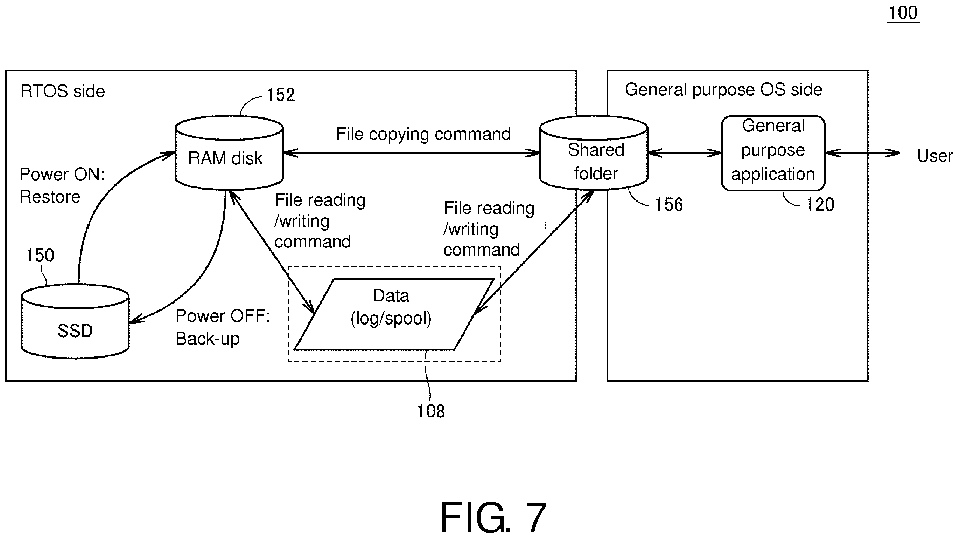

FIG. 7 is a schematic diagram showing an implementation using a plurality of types of storage areas in the control device 100 according to the present embodiment. Referring to FIG. 7, the control device 100 includes, as a storage area, an SSD 150, a RAM disk 152, a RAM 108, and a shared folder 156.

The RAM disk 152 is typically a component enabling a volatile memory to function as a kind of storage device, and is a memory device having a high access speed but relatively less memory capacity. The shared folder 156 is typically obtained by setting a storage area of an HDD as a folder. The shared folder 156 has a relatively low access speed since it is accessed through a file sharing protocol, but its memory capacity can be increased.

Data (log or spool) can be written from both the RAM disk 152 and the shared folder 156 to the RAM 108 serving as a temporary storage area, and processed data can be written to any of the RAM disk 152 and the shared folder 156. Furthermore, data (file) copying is also enabled between the RAM disk 152 and the shared folder 156.

By storing data utilized by the user program executed by the real-time OS 114 for controlling an equipment or a machine or the user program itself in the RAM disk 152 or the RAM 108 that can be accessed at high speed, faster and more stable control can be realized. In addition, by adopting the RAM disk 152, possibility of data loss can be reduced. Moreover, the data stored in the RAM disk 152 or the RAM 108 can no longer be accessed from the general purpose OS 116. Thus, execution of the user program will not be affected by the processes of the general purpose OS 116.

On the other hand, by storing data that the user desires to reference or change, such as a log file or various setting values, in the shared folder 156, easier access to the data can be provided to the user. The shared folder 156 can be accessed from any of the real-time OS 114 and the general purpose OS 116, and thus, data can be easily exchanged across the OSs.

Moreover, since the data stored in the RAM disk 152 is erased by cutting off the power, the SSD 150 backs up the information held by the RAM disk 152. More specifically, when the power of the control device 100 is turned on (strictly speaking, when the real-time OS 114 is activated), the data stored in the SSD 150 is restored to the RAM disk 152. Conversely, when the power of the control device 100 is turned off (strictly speaking, when the real-time OS 114 is shut down), the data stored in the RAM disk 152 is restored to the SSD 150.

In this way, by combining the SSD 150 with the RAM disk 152, the control device 100 with an increased access speed while preventing data loss can be realized.

As shown in FIG. 7, a plurality of types of storage devices having different properties may be prepared in advance, so that the user can select an arbitrary storage device according to uses. For example, the user may specify the SSD 150 with high reliability, the highly convenient shared folder 156, the RAM disk 152 that can be accessed at high speed and so on according to the user's use.

In the case of using a plurality of storage devices as described above, the user may explicitly select a storage device to be used and specify the selected storage device to execute a command. By adopting such configuration, although a plurality of storage devices cannot be utilized at the same time, command compatibility with a conventional model can be maintained.

In the case of utilizing a plurality of types of storage areas as described above, in a program operating on the real-time OS 114, a command enabling selective access to the shared area and the storage area of each of the plurality of types of memory devices may be available. For example, a unique device variable may be allocated to each of the storage areas and a storage area of an access destination may be specified by specifying the device variable.

Alternatively, dedicated commands may also be prepared for each storage device to be used. By preparing the same number of dedicated commands as the number of types of the storage devices, a plurality of types of storage devices can be utilized at the same time.

Moreover, access to a storage area managed by the real-time OS 114 from the general purpose application 120 executed by the general purpose OS 116 is prohibited. The reason is to avoid influences of an arbitrary application executed by the general purpose OS 116 on the execution of the user program 118 and so on. Hence, it is preferred that the file sharing function itself is not mounted on the side of real-time OS 114 in the first place.

### <F. Security>

In cases where the file sharing client function 1152 of the real-time OS 114 accesses the file sharing server function 1162 of the general purpose OS 116 shown in FIG. 3 and FIG. 4, authentication information (password) set in the file sharing server function 1162 or designation of the file sharing server function 1162 itself and various settings become necessary. Setting for realizing such access to a shared storage area (typically a shared folder) may be performed through a program development device connected to the control device 100, or setting for the file sharing client function 1152 of the real-time OS 114 may be performed using the general purpose application 120 executed by the general purpose OS 116.

Moreover, it is preferred that no default settings or the like be given in advance to authentication information for allowing access to the storage device managed by the general purpose OS 116.

### <G. Conclusion>

The control device 100 according to the present embodiment is capable of stably executing control over an equipment or a machine using a general purpose computing device, and also capable of flexibly processing information relating to a control process executed by a real-time OS using an arbitrary general purpose application executed by a general purpose OS. By adopting such configuration, realization of a stable control action and improvement of usability can both be achieved.

The embodiments disclosed herein are examples in all aspects and should not be interpreted as limitations. The scope of the invention is defined by claims instead of the above descriptions, and it is intended to include all modifications within the scope of the claims and the equivalents thereof.

## Claims

1. A control device (100) for controlling an equipment or a machine, comprising:
a hardware resource, comprising one or more processors (102) and storage devices (110);
a real-time operating system (OS) (114), executed using the hardware resource;
a general purpose operating system (OS) (116), executed using the hardware resource, and operating independently of the real-time OS (114); and
a hypervisor (112), managing the hardware resource allocated to the real-time OS (114) and the general purpose OS (116),
wherein the control device (100) comprises:
a file sharing server function (1162) operating on the general purpose OS (116) to reserve a part of the storage device (110) as a storage area, and to share at least one part of the reserved storage area set by a user with another device, wherein access to the storage area reserved by the real-time OS (114) from an application executed by the general purpose OS (116) is prohibited;
a function (1152) operating on the real-time OS (114) to participate in the file sharing server function (1162) as a client through the hypervisor (112);
a function (1140) operating on the real-time OS (114) to periodically monitor whether or not a shared area provided by the file sharing server function (1162) is accessible, wherein the hypervisor (112) establishes a logical connection between the real-time OS (114) and the general purpose OS (116); and
a function of implementing a plurality of types of storage areas according to properties or types of data, comprising:
setting the storage area of an HDD as a shared folder (156) capable of being accessed from any of the real-time OS (114) and the general purpose OS (116);
setting a RAM disk (152) that is reserved by the real-time OS (114) and not accessible for the general purpose OS (116); and
setting an SSD (150) to back up an information held by the RAM disk (152).

2. The control device (100) according to claim 1, wherein in a program operating on the real-time OS (114), a command enabling access to the shared area is available.

3. The control device (100) according to claim 1 or 2, wherein in a program operating on the real-time OS (114), information showing whether or not the shared area is accessible is referenceable.

4. The control device (100) according to any one of claims 1 to 3, comprising:
a file transfer protocol (FTP) server function (1146) operating on the real-time OS (114) to process an FTP connection from an external device; and
a function operating on the real-time OS (114) to enable the external device to access the shared area through the FTP server function (1146).

5. The control device (100) according to claim 4, comprising:
a function operating on the real-time OS (114) to enable information showing whether or not the shared area is accessible to be referenced from the external device through the FTP server function (1146).

6. The control device (100) according to any one of claims 1 to 5, comprising:
a hypertext transfer protocol (HTTP) server function (1148) operating on the real-time OS (114) to process an HTTP connection from an external device; and
a function operating on the real-time OS (114) to enable the external device to access the shared area through the HTTP server function (1148).

7. The control device (100) according to claim 6, comprising:
a function operating on the real-time OS (114) to enable information showing whether or not the shared area is accessible to be referenced from the external device through the HTTP server function (1148).

8. The control device (100) according to any one of claims 1 to 7, wherein the file sharing server function (1162) is configured to enable the shared area to be shared with another device different from the control device (100).

9. The control device (100) according to any one of claims 1 to 8, wherein the storage device (110) comprises a plurality of types of memory devices; and
in a program operating on the real-time OS (114), a command enabling selective access to the shared area and the storage area of each of the plurality of types of memory devices is available.

10. A control method in a control device (100) controlling an equipment or a machine, the control method comprising:
a step of managing allocation of a hardware resource to a real-time OS (114) and to a general purpose OS (116) operating independently of the real-time OS (114), the hardware resource comprising one or more processors (102) and storage devices (110);
a step executed on the general purpose OS (116) of reserving a part of the storage device (110) as a storage area and of sharing at least one part of the reserved storage area set by a user with another device;
a step executed on the real-time OS (114) of participating in a file sharing server function (1162) as a client through a hypervisor (112);
a step executed on the real-time OS (114) of periodically monitoring whether or not a shared area provided by the file sharing server function (1162) is accessible, wherein the hypervisor (112) establishes a logical connection between the real-time OS (114) and the general purpose OS (116);
a step of prohibiting access to the storage area reserved by the real-time OS (114) from an application executed by the general purpose OS (116);
a step of setting the storage area of an HDD as a shared folder (156) capable of being accessed from any of the real-time OS (114) and the general purpose OS (116);
a step of setting a RAM disk (152) that is reserved by the real-time OS (114) and not accessible for the general purpose OS (116); and
a step of setting an SSD (150) to back up an information held by the RAM disk (152).

11. A program containing a real-time OS (114) capable of constructing an environment for controlling an equipment or a machine, wherein
the real-time OS (114) uses a hardware resource comprising one or more processors (102) and storage devices (110) and is executed in parallel with a general purpose OS (116) operating independently of the real-time (114) OS under a hypervisor (112) managing the hardware resource, and
a file sharing server function (1162) operating on the real-time OS (114) reserves a part of the storage device (110) as a storage area, and shares at least one part of the reserved storage area set by a user with another device, wherein access to the storage area reserved by the real-time OS (114) from an application executed by the general purpose OS (116) is prohibited, wherein
the program comprises:
a module participating in the file sharing server function (1162) as a client through the hypervisor (112);
a module periodically monitoring whether or not a shared area provided by the file sharing server function (1162) is accessible, wherein the hypervisor (112) establishes a logical connection between the real-time OS (114) and the general purpose OS (116);
a module setting the storage area of an HDD as a shared folder (156) capable of being accessed from any of the real-time OS (114) and the general purpose OS (116);
a module setting a RAM disk (152) that is reserved by the real-time OS (114) and not accessible for the general purpose OS (116); and
a module setting an SSD (150) to back up an information held by the RAM disk (152).

## Patentansprüche

1. Steuervorrichtung (100) zum Steuern eines Geräts oder einer Maschine, umfassend:
eine Hardwareressource, die einen oder mehrere Prozessoren (102) und Speichervorrichtungen (110) umfasst;
ein Echtzeit-Betriebssystem (OS) (114), das unter Verwendung der Hardwareressource ausgeführt wird;
ein allgemeines Betriebssystem (OS) (116), das unter Verwendung der Hardwareressource ausgeführt wird und unabhängig von dem Echtzeit-Betriebssystem (OS) (114) arbeitet; und
einen Hypervisor (112), der die dem Echtzeit-Betriebssystem (114) und dem allgemeinen Betriebssystem (116) zugeordneten Hardwareressourcen verwaltet,
wobei die Steuervorrichtung (100) umfasst:
eine File-Sharing-Serverfunktion (1162), die auf dem allgemeinen Betriebssystem (116) arbeitet, um einen Teil der Speichervorrichtung (110) als einen Speicherbereich zu reservieren und wenigstens einen Teil des reservierten Speicherbereichs, der von einem Benutzer eingestellt wurde, mit einer anderen Vorrichtung zu teilen, wobei der Zugriff auf den Speicherbereich, reserviert durch das Echtzeitbetriebssystem (114) von einer Anwendung, ausgeführt durch das allgemeine Betriebssystem (116), verboten ist;
eine Funktion (1152), die auf dem Echtzeit-Betriebssystem (114) arbeitet, um an der File-Sharing-Serverfunktion (1162) als ein Client durch den Hypervisor (112) teilzunehmen;
eine Funktion (1140), die auf dem Echtzeit-Betriebssystem (114) arbeitet, um periodisch zu überwachen, ob ein freigegebener Bereich, bereitgestellt von der File-Sharing-Serverfunktion (1162), zugänglich ist oder nicht, wobei der Hypervisor (112) eine logische Verbindung zwischen dem Echtzeit-Betriebssystem (114) und dem allgemeinen Betriebssystem (116) herstellt; und
eine Funktion zum Implementieren einer Vielzahl von Arten von Speicherbereichen entsprechend den Eigenschaften oder Datentypen, umfassend:
das Einstellen des Speicherbereichs einer HDD als einen geteilten Ordner (156), auf den von jedem des Echtzeit-Betriebssystems (114) und des allgemeinen Betriebssystems (116) zugegriffen werden kann;
Einstellen einer RAM-Disk (152), die von dem Echtzeit-Betriebssystem (114) reserviert ist und auf die nicht von dem allgemeinen Betriebssystem (116) zugegriffen werden kann; und
Einstellen einer SSD (150) zum Sichern einer Information, die durch die RAM-Disk (152) gehalten wird.

2. Steuervorrichtung (100) gemäß Anspruch 1, wobei in einem Programm, das auf dem Echtzeit-Betriebssystem (114) arbeitet, ein Befehl verfügbar ist, der den Zugriff auf den geteilten Bereich ermöglicht.

3. Steuervorrichtung (100) gemäß Anspruch 1 oder 2, wobei in einem Programm, das auf dem Echtzeit-Betriebssystem (114) arbeitet, Informationen, die zeigen, ob auf den geteilten Bereich zugegriffen werden kann oder nicht, verwiesen werden kann.

4. Steuervorrichtung (100) gemäß einem der Ansprüche 1 bis 3, umfassend:
eine Dateiübertragungsprotokoll-(FTP)-Serverfunktion (1146), die auf dem Echtzeit-Betriebssystem (114) arbeitet, um eine FTP-Verbindung von einer externen Vorrichtung zu verarbeiten; und
eine Funktion, die auf dem Echtzeit-Betriebssystem (114) arbeitet, um der externen Vorrichtung den Zugriff auf den geteilten Bereich über die FTP-Server-Funktion (1146) zu ermöglichen.

5. Steuervorrichtung (100) gemäß Anspruch 4, umfassend:
eine Funktion, die auf dem Echtzeit-Betriebssystem (114) arbeitet, um zu ermöglichen, dass auf Informationen, die zeigen, ob der geteilte Bereich zugänglich ist oder nicht, verwiesen werden kann
von der externen Vorrichtung über die FTP-Serverfunktion (1146).

6. Steuervorrichtung (100) gemäß irgendeinem der Ansprüche 1 bis 5, umfassend:
eine Hypertext-Transfer-Protokoll (HTTP)-Serverfunktion (1148), die auf dem Echtzeit-Betriebssystem (114) arbeitet, um eine HTTP-Verbindung von einer externen Vorrichtung zu verarbeiten; und
eine Funktion, die auf dem Echtzeit-Betriebssystem (114) arbeitet, um der externen Vorrichtung den Zugriff auf den geteilten Bereich über die HTTP-Server-Funktion (1148) zu ermöglichen.

7. Steuereinrichtung (100) gemäß Anspruch 6, umfassend:
eine Funktion, die auf dem Echtzeit-Betriebssystem (114) arbeitet, um zu ermöglichen, dass auf Informationen, die zeigen, ob der geteilte Bereich zugänglich ist oder nicht, verwiesen werden kann von der externen Vorrichtung über die HTTP-Server-Funktion (1148).

8. Steuervorrichtung (100) gemäß irgendeinem der Ansprüche 1 bis 7, wobei die File-Sharing-Serverfunktion (1162) konfiguriert ist, um es dem geteilten Bereich zu ermöglichen mit einer anderen Vorrichtung, die sich von der Steuervorrichtung (100) unterscheidet, geteilt zu werden.

9. Steuervorrichtung (100) gemäß irgendeinem der Ansprüche 1 bis 8, wobei die Speichervorrichtung (110) eine Vielzahl von Typen von Speichervorrichtungen umfasst; und
in einem Programm, das auf dem Echtzeit-Betriebssystem (114) arbeitet, ist ein Befehl verfügbar, der den selektiven Zugriff auf den geteilten Bereich und den Speicherbereich jeder der mehreren Arten von Speichergeräten ermöglicht.

10. Steuerverfahren in einer Steuervorrichtung (100), die ein Gerät oder eine Maschine steuert, wobei das Steuerverfahren umfasst:
einen Schritt des Verwaltens der Zuweisung einer Hardwareressource an ein Echtzeit-Betriebssystem (114) und an ein allgemeines Betriebssystem (116), das unabhängig von dem Echtzeit-Betriebssystem (114) arbeitet, wobei die Hardwareressource einen oder mehrere Prozessoren (102) und Speichervorrichtungen (110) umfasst;
einen Schritt, ausgeführt auf dem allgemeinen Betriebssystem (116), des Reservierens eines Teils der Speichervorrichtung (110) als einen Speicherbereich und Teilen von wenigstens eines Teils des reservierten Speicherbereichs, eingestellt von einem Benutzer mit einer anderen Vorrichtung;
einen Schritt, ausgeführt auf dem Echtzeit-Betriebssystem (114), des Teilnehmens an einer File-Sharing-Serverfunktion (1162) als ein Client durch einen Hypervisor (112);
einen Schritt, ausgeführt auf dem Echtzeit-Betriebssystem (114), des periodischen Überwachens, ob auf einen von der File-Sharing-Serverfunktion (1162) bereitgestellten geteilten Bereich zugegriffen werden kann oder nicht, wobei der Hypervisor (112) eine logische Verbindung zwischen dem Echtzeit-Betriebssystem (114) und dem allgemeinen Betriebssystem (116) herstellt;
einen Schritt des Verbietens des Zugriffs auf den Speicherbereich, reserviert durch das Echtzeit-Betriebssystem (114) von einer Anwendung, ausgeführt durch das Allgemeines Betriebssystem (116);
einen Schritt des Einstellens des Speicherbereichs einer HDD als einen geteilten Ordner (156), auf den von jedem des Echtzeit-Betriebssystems (114) und des allgemeinen Betriebssystem (116) zugegriffen werden kann;
einen Schritt des Einstellens einer RAM-Disk (152), die von dem Echtzeit-Betriebssystem (114) reserviert ist und auf die das allgemeine Betriebssystem (116) nicht zugreifen kann; und
ein Schritt des Einstellens einer SSD (150) zum Sichern einer Information, gehalten durch die RAM-Disk (152).

11. Programm, das ein Echtzeit-Betriebssystem (114) enthält, das in der Lage ist, eine Umgebung zum Steuern eines Geräts oder einer Maschine zu konstruieren, wobei
das Echtzeit-Betriebssystem (114) eine Hardwareressource verwendet, umfassend einen oder mehrere Prozessoren (102) und Speichervorrichtungen (110), und parallel zu einem allgemeinen Betriebssystem (116) ausgeführt wird, das unabhängig von dem Echtzeit-Betriebssystem (114) unter einem Hypervisor (112) arbeitet, der die Hardwareressource verwaltet, und
eine File-Sharing-Serverfunktion (1162), die auf dem Echtzeit-Betriebssystem (114) arbeitet, einen Teil der Speichervorrichtung (110) als einen Speicherbereich reserviert und wenigstens einen Teil des reservierten Speicherbereichs, eingestellt von einem Benutzer, mit einer anderen Vorrichtung teilt, wobei der Zugriff auf den von dem Echtzeit-Betriebssystem (114) reservierten Speicherbereich von einer Anwendung, ausgeführt durch das allgemeine Betriebssystem (116), verboten ist, wobei
das Programm umfasst:
ein Modul, das über den Hypervisor (112) an der File-Sharing-Serverfunktion (1162) als ein Client teilnimmt;
ein Modul, das periodisch überwacht, ob ein von der File-Sharing-Serverfunktion (1162) bereitgestellter geteilter Bereich zugänglich ist oder nicht, wobei der Hypervisor (112) eine logische Verbindung zwischen dem Echtzeit-Betriebssystem (114) und dem allgemeinen Betriebssystem (116) herstellt;
ein Modul, das den Speicherbereich einer HDD als einen geteilten Ordner (156) einstellt, auf den von jedem des Echtzeit-Betriebssystem (114) und des allgemeinen Betriebssystem (116) zugegriffen werden kann;
ein Modul, das eine RAM-Disk (152) einstellt, die von dem Echtzeit-Betriebssystem (114) reserviert ist und auf die nicht von dem allgemeinen Betriebssystem (116) zugegriffen werden kann; und
ein Modul, das eine SSD (150) zum Sichern einer Information, gespeichert in der RAM-Disk (152), einstellt.

## Revendications

1. Dispositif de commande (100) pour contrôler un équipement ou une machine, comprenant :
une ressource matérielle comprenant un ou plusieurs processeurs (102) et des dispositifs de stockage (110) ;
un système d'exploitation en temps réel (OS) (114) exécuté en utilisant la ressource matérielle ;
un système d'exploitation à usage général (OS) (116) exécuté en utilisant la ressource matérielle et fonctionnant indépendamment de l'OS en temps réel (114) ; et
un hyperviseur (112) gérant la ressource matérielle allouée à l'OS en temps réel (114) et à l'OS à usage général (116),
dans lequel le dispositif de commande (100) comprend :
une fonction de serveur de partage de fichiers (1162) fonctionnant sous l'OS à usage général (116) pour réserver une partie du dispositif de stockage (110) en tant que zone de stockage, et pour partager au moins une partie de la zone de stockage réservée définie par un utilisateur avec un autre dispositif, dans lequel l'accès à la zone de stockage réservée par l'OS en temps réel (114) à partir d'une application exécutée par l'OS à usage général (116) est prohibé ;
une fonction (1152) fonctionnant sous l'OS en temps réel (114) pour participer à la fonction de serveur de partage de fichiers (1162) en tant que client via l'hyperviseur (112) ;
une fonction (1140) fonctionnant sous l'OS en temps réel (114) pour surveiller périodiquement si, oui ou non, une zone partagée fournie par la fonction de serveur de partage de fichiers (1162) est accessible, dans lequel l'hyperviseur (112) établit une connexion logique entre l'OS en temps réel (114) et l'OS à usage général (116) ; et
une fonction d'implémentation d'une pluralité de types de zones de stockage en fonction de propriétés ou de types de données, comprenant :
la définition de la zone de stockage d'un disque dur en tant que dossier partagé (156) auquel il est possible d'accéder à partir de l'un quelconque parmi l'OS en temps réel (114) et l'OS à usage général (116) ;
la définition d'un disque RAM (152) réservé par l'OS en temps réel (114) et non accessible pour l'OS à usage général (116) ; et
la définition d'un disque SSD (150) pour sauvegarder une information détenue par le disque RAM (152).

2. Dispositif de commande (100) selon la revendication 1, dans lequel, dans un programme fonctionnant sous l'OS en temps réel (114), une instruction autorisant l'accès à la zone partagée est disponible.

3. Dispositif de commande (100) selon la revendication 1 ou 2, dans lequel, dans un programme fonctionnant sous l'OS en temps réel (114), de l'information montrant si, oui ou non, la zone partagée est accessible peut être référencée.

4. Dispositif de commande (100) selon l'une quelconque des revendications 1 à 3, comprenant :
une fonction de serveur à protocole de transfert de fichiers (FTP) (1146) fonctionnant sous l'OS en temps réel (114) pour traiter une connexion FTP d'un dispositif externe ; et
une fonction fonctionnant sous l'OS en temps réel (114) pour autoriser le dispositif externe à accéder à la zone partagée par l'intermédiaire de la fonction de serveur FTP (1146).

5. Dispositif de commande (100) selon la revendication 4, comprenant :
une fonction fonctionnant sous l'OS en temps réel (114) pour autoriser de l'information montrant si, oui ou non, la zone partagée est accessible à être référencée à partir du dispositif externe par l'intermédiaire de la fonction de serveur FTP (1146).

6. Dispositif de commande (100) selon l'une quelconque des revendications 1 à 5, comprenant :
une fonction de serveur à protocole de transfert hypertexte (HTTP) (1148) fonctionnant sous l'OS en temps réel (114) pour traiter une connexion HTTP à partir d'un dispositif externe ; et
une fonction fonctionnant sous l'OS en temps réel (114) pour autoriser le dispositif externe à accéder à la zone partagée par l'intermédiaire de la fonction de serveur HTTP (1148).

7. Dispositif de commande (100) selon la revendication 6, comprenant :
une fonction fonctionnant sous l'OS en temps réel (114) pour autoriser de l'information montrant si, oui ou non, la zone partagée est accessible, à être référencée à partir du dispositif externe par l'intermédiaire de la fonction de serveur HTTP (1148).

8. Dispositif de commande (100) selon l'une quelconque des revendications 1 à 7, dans lequel la fonction de serveur de partage de fichiers (1162) est configurée pour autoriser la zone partagée à être partagée avec un autre dispositif différent du dispositif de commande (100).

9. Dispositif de commande (100) selon l'une quelconque des revendications 1 à 8, dans lequel le dispositif de stockage (110) comprend une pluralité de types de dispositifs de mémoire ; et
dans un programme fonctionnant sous l'OS en temps réel (114), une instruction autorisant l'accès sélectif à la zone partagée et la zone de stockage de chacun de la pluralité des types de dispositifs de mémoire est disponible.

10. Procédé de commande dans un dispositif de commande (100) contrôlant un équipement ou une machine, le procédé de commande comprenant :
une étape de gestion de l'allocation d'une ressource matérielle à un OS en temps réel (114) et à un OS à usage général (116) fonctionnant indépendamment de l'OS en temps réel (114), la ressource matérielle comprenant un ou plusieurs processeurs (102) et des dispositifs de stockage (110) ;
une étape exécutée sous l'OS à usage général (116) consistant à réserver une partie du dispositif de stockage (110) en tant que zone de stockage et à partager au moins une partie de la zone de stockage réservée définie par un utilisateur avec un autre dispositif ;
une étape exécutée sous l'OS en temps réel (114) consistant à participer à une fonction de serveur de partage de fichiers (1162) en tant que client par l'intermédiaire d'un hyperviseur (112) ;
une étape exécutée sous l'OS en temps réel (114) consistant à surveiller périodiquement si, oui ou non, une zone partagée fournie par la fonction de serveur de partage de fichiers (1162) est accessible, dans lequel l'hyperviseur (112) établit une connexion logique entre l'OS en temps réel (114) et l'OS à usage général (116) ;
une étape de prohibition d'accès à la zone de stockage réservée par l'OS en temps réel (114) à partir d'une application exécutée par l'OS à usage général (116) ;
une étape de définition de la zone de stockage d'un disque dur en tant que dossier partagé (156) auquel il est possible d'accéder à partir de l'un quelconque parmi l'OS en temps réel (114) et l'OS à usage général (116) ;
une étape de définition d'un disque RAM (152) qui est réservé par l'OS en temps réel (114) et non accessible pour l'OS à usage général (116) ; et
une étape de définition d'un disque SSD (150) pour sauvegarder une information détenue par le disque RAM (152) .

11. Programme contenant un OS en temps réel (114) capable de construire un environnement pour contrôler un équipement ou une machine, dans lequel
l'OS en temps réel (114) utilise une ressource matérielle comprenant un ou plusieurs processeurs (102) et des dispositifs de stockage (110) et est exécuté en parallèle avec un OS à usage général (116) fonctionnant indépendamment de l'OS en temps réel (114) dans un hyperviseur (112) gérant la ressource matérielle, et
une fonction de serveur de partage de fichiers (1162) fonctionnant sous l'OS en temps réel (114) réserve une partie du dispositif de stockage (110) en tant que zone de stockage, et partage au moins une partie de la zone de partage réservée définie par un utilisateur avec un autre dispositif, dans lequel l'accès à la zone de stockage réservée par l'OS en temps réel (114) à partir d'une application exécutée par l'OS à usage général (116) est prohibé, dans lequel
le programme comprend :
un module participant à la fonction de serveur de partage de fichiers (1162) en tant que client par l'intermédiaire de l'hyperviseur (112) ;
un module surveillant périodiquement si, oui ou non, une zone partagée fournie par la fonction de serveur de partage de fichiers (1162) est accessible, dans lequel l'hyperviseur (112) établit une connexion logique entre l'OS en temps réel (114) et l'OS à usage général (116) ;
un module définissant la zone de stockage d'un disque dur en tant que dossier partagé (156) auquel il est possible d'accéder à partir de l'un quelconque parmi l'OS en temps réel (114) et l'OS à usage général (116) ;
un module définissant un disque RAM (152) qui est réservé par l'OS en temps réel (114) et n'est pas accessible pour l'OS à usage général (116) ; et
un module définissant un disque SSD (150) pour sauvegarder de l'information détenue par le disque RAM (152) .
